(19) Europäisches Patentamt
European Patent Office
Office européen des brevets

(11) **EP 4 015 475 A1**

(12) **EUROPÄISCHE PATENTANMELDUNG**

(43) Veröffentlichungstag:
**22.06.2022 Patentblatt 2022/25**

(21) Anmeldenummer: **20214991.0**

(22) Anmeldetag: **17.12.2020**

(51) Internationale Patentklassifikation (IPC):
***C03B 37/012*** (2006.01) ***C03B 37/027*** (2006.01)

(52) Gemeinsame Patentklassifikation (CPC):
**C03B 37/0122; C03B 37/01245; C03B 37/01248;
C03B 37/02781;** C03B 2203/14; C03B 2203/16;
C03B 2203/42

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Heraeus Quarzglas GmbH & Co. KG
63450 Hanau (DE)**

(72) Erfinder:
• **ROSENBERGER, Manuel
  63450 Hanau (DE)**
• **PLASS, Jaqueline
  63450 Hanau (DE)**
• **SCHUSTER, KAY
  06803 Bitterfeld (DE)**

(74) Vertreter: **Staudt, Armin Walter
  Sandeldamm 24a
  63450 Hanau (DE)**

(54) **VERFAHREN ZUR HERSTELLUNG EINER VORFORM FÜR EINE ANTIRESONANTEN HOHLKERNFASER MIT VERSCHACHTELTEN KAPILLAREN, VORFORM UND ZWISCHENPRODUKT**

(57) Es sind Verfahren zur Herstellung einer Antiresonanten Hohlkernfaser bekannt, die einen sich entlang einer Faser-Längsachse erstreckenden Hohlkern und einen den Hohlkern umgebenden inneren Mantelbereich aufweist, der mehrere Antiresonanzelemente umfasst. Die bekannten Verfahren umfassen die Verfahrensschritte des Bereitstellens eines Hüllrohres und von rohrförmigen Antiresonanzelement-Vorformlingen, von denen mindestens ein Teil als Kapillarhalbzeug vorliegt, das mindestens eine ARE-Außenkapillare und mindestens eine mit einer Innenmantelfläche der ARE-Außenkapillare verbundene, verschachtelte NE-Innenkapillare umfasst. Die Herstellung des Kapillarhalbzeugs umfasst dabei die Verfahrensschritte des Fixierens eines NE-Innenrohres, das einen Außendurchmesser $OD_{NE}$ und einen Innendurchmesser $ID_{NE}$ aufweist an der Innenmantelfläche eines ARE-Außenrohres, das einen Außendurchmesser $OD_{ARE}$ und einen Innendurchmesser $ID_{ARE}$ aufweist, unter Bildung eines Kapillarhalbzeug-Ensembles, des thermischen Streckens des Kapillarhalbzeug-Ensembles zu dem Kapillarhalbzeug, das einen maximalen Außendurchmesser $OD_{ARE\_cap}$ und eine maximale Wanddicke $WT_{ARE\_cap}$ aufweist, des Montierens des Kapillarhalbzeugs an Soll-Positionen der Innenseite der Hüllrohr-Wandung unter Bildung einer primären Vorform, und des Elongierens der primären Vorform zu der Hohlkernfaser oder der Weiterverarbeitung der primären Vorform zu einer sekundären Vorform, aus der die Hohlkernfaser gezogen wird. Um die Vorteile des vorkonfektionierten Kapillarhalbzeugs in Bezug auf den Montageaufwand und Präzision beizubehalten aber die damit einhergehenden Nachteile infolge von Ovalität gering und vorhersehbar zu halten, wird vorgeschlagen, dass die geometrischen Abmessungen $OD_{NE}$, $ID_{NE}$, $OD_{ARE}$, $ID_{ARE}$ sowie $OD_{ARE\_cap}$ und $WT_{ARE\_cap}$ derart aufeinander abgestimmt werden, dass die ARE-Außenkapillare des Kapillarhalbzeugs einen Ovalitätsgrad von weniger als 1,025 aufweist.

EP 4 015 475 A1

**(Forts. nächste Seite)**

Fig. 3

**Beschreibung**

Technischer Hintergrund

Die Erfindung liegt auf dem Gebiet der optischen Fasertechnologie und dabei insbesondere im Bereich der Antiresonanten Hohlkern-Fasern. Diese Fasern ermöglichen die Lichtführung in einem "hohlen" Kern, der entweder evakuiert oder mit einem Gas gefüllt ist. Dabei verspricht diese Fasertechnologie eine niedrige optische Dämpfung, ein sehr breites Transmissionsspektrum (insbesondere auch im UV- oder IR-Wellenlängenbereich) und eine geringe Latenzzeit bei der Datenübertragung. Darüber hinaus eignen sich diese Fasern zur Spektroskopie sowie zur Übertragung von kurzen Laserpulsen.

Insbesondere betrifft die Erfindung ein Verfahren zur Herstellung einer Antiresonanten Hohlkernfaser, die einen sich entlang einer Faser-Längsachse erstreckenden Hohlkern und einen den Hohlkern umgebenden Mantelbereich, der mehrere Antiresonanzelemente umfasst, mit den Verfahrensschritten:

(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,

(b) Bereitstellen von rohrförmigen Antiresonanzelement-Vorformlingen, von denen mindestens ein Teil als Kapillarhalbzeug vorliegt, das mindestens eine ARE-Außenkapillare und mindestens eine mit einer Innenmantelfläche der ARE-Außenkapillare verbundene, verschachtelte NE-Innenkapillare umfasst, wobei die Herstellung des Kapillarhalbzeugs folgende Verfahrensschritte umfasst:

(b1) Fixieren eines NE-Innenrohres, das einen Außendurchmesser $OD_{NE}$ und einen Innendurchmesser $ID_{NE}$ aufweist an der Innenmantelfläche eines ARE-Außenrohres, das einen Außendurchmesser $OD_{ARE}$ und einen Innendurchmesser $ID_{ARE}$ aufweist, unter Bildung eines Kapillarhalbzeug-Ensembles,

(b2) thermisches Strecken des Kapillarhalbzeug-Ensembles zu dem Kapillarhalbzeug, das einen maximalen Außendurchmesser $OD_{ARE\_cap}$ und eine maximale Wanddicke $WT_{ARE\_cap}$ aufweist,

(c) Montieren des Kapillarhalbzeug an Soll-Positionen der Innenseite der Hüllrohr-Wandung unter Bildung einer primären Vorform, die einen hohlen Kernbereich und einen Mantelbereich aufweist, und

(d) Elongieren der primären Vorform zu der Hohlkernfaser oder Weiterverarbeitung der primären Vorform zu einer sekundären Vorform, aus der die Hohlkernfaser gezogen wird.

Außerdem betrifft die Erfindung ein Verfahren zur Herstellung einer Vorform für eine Antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:

(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,

(b) Bereitstellen von rohrförmigen Antiresonanzelement-Vorformlingen, von denen mindestens ein Teil als Kapillarhalbzeug vorliegt, das mindestens eine ARE-Außenkapillare und mindestens eine mit einer Innenmantelfläche der ARE-Außenkapillare verbundene, verschachtelte NE-Innenkapillare umfasst, wobei die Herstellung des Kapillarhalbzeugs folgende Verfahrensschritte umfasst:

(b1) Fixieren eines NE-Innenrohres, das einen Außendurchmesser $OD_{NE}$ und einen Innendurchmesser $ID_{NE}$ aufweist an der Innenmantelfläche eines ARE-Außenrohres, das einen Außendurchmesser $OD_{ARE}$ und einen Innendurchmesser $ID_{ARE}$ aufweist, unter Bildung eines Kapillarhalbzeug-Ensembles,
(b2) thermisches Strecken des Kapillarhalbzeug-Ensembles zu dem Kapillarhalbzeug, das einen maximalen Außendurchmesser $OD_{ARE\_cap}$ und eine maximale Wanddicke $WT_{ARE\_cap}$ aufweist,

(c) Montieren des Kapillarhalbzeugs an Soll-Positionen der Innenseite der Hüllrohr-Wandung unter Bildung einer primären Vorform, die einen hohlen Kernbereich und einen Mantelbereich aufweist, und

(d) optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:

(i) Elongieren,

(ii) Kollabieren,

(iii) Kollabieren und gleichzeitiges Elongieren,

(iv) Aufkollabieren von zusätzlichem Mantelmaterial,

(v) Aufkollabieren von zusätzlichem Mantelmaterial und anschlie-βendes Elongieren,

(vi) Aufkollabieren von zusätzlichem Mantelmaterial und gleichzeitiges Elongieren

Darüber hinaus betrifft die Erfindung ein Kapillarhalbzeug als Zwischenprodukt für die Herstellung einer Antiresonanten Hohlkernfaser, das mindestens eine ARE-Außenkapillare und mindestens eine mit der Innenmantelfläche der ARE-Außenkapillare verbundene, verschachtelte NE-Innenkapillare umfasst.
Außerdem geht es bei der Erfindung um eine Vorform für eine Antiresonante Hohlkernfaser, wobei die Vorform einen hohlen Kernbereich und einen Mantelbereich aufweist, der ein Hüllrohr mit einer Hüllrohr-Wandung und eine Anzahl an einer Innenseite der Hüllrohr-Wandung angeordneter rohrförmiger Antiresonanzelement-Vorformlinge umfasst.
Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.
Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".
Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.
Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.
Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.
Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich. Darüber hinaus eignen sich diese Fasern für spektroskopische Anwendungen sowie zur Übertragung von kurzen Laserpulsen.

Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.
In einem Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Antiresonanzelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die Vorformen für derartige "Nested Antiresonant Nodeless Hollow Core Fibers" (NANF) sind aus einer Vielzahl Antiresonanter Elemente (ARE) zusammengesetzt. Sie werden häufig im sogenannten "Stack-and-Draw"-Verfahren hergestellt. Beispielsweise werden zur Herstellung einer Vorform für eine Hohlkernfaser im "NANF"-Design mehrere Antiresonanzelement-Vorformlinge, jeweils bestehend aus einem Antiresonanzelement-Außenrohr (im Folgenden kurz: ARE-Außenrohr), und einseitig an der ARE-Außenrohr-Innenmantelfläche angeordnetes Nested-Element-Innenrohr (im Folgenden kurz: NE-Innenrohr) an der Innenseite eines Hüllrohres angebracht.

Jedes der Antiresonanzelement-Vorformlinge weist eine gewisse Abweichung von seiner Sollgeometrie auf und jeder Schritt der Positionierung und Umformung führt zwangsläufig zu Geometrieabweichungen, die sich in der Vorform zu einem absoluten Geometriefehler aufsummieren können. Dies stellt hohe Anforderungen an die Genauigkeit beim Positionieren und Fixieren der Ausgangselemente an ihren jeweilen Soll-Positionen insbesondere bei kompakten Anordnungen und kurzen Abständen der Ausgangselemente zueinander. Zur Realisierung geringer Dämpfungswerte und breiter Transmissionsbereiche ist neben einer gleichmäßigen Wandstärke der Antiresonanzelemente insbesondere deren azimutale Position an der Innenwand des Hüllrohres entscheidend. Der Anheftpunkt des NE-Innenrohres am ARE-Außenrohr sollte hierbei die gleiche azimutale Position aufweisen wie der Anheftpunkt des ARE-Außenrohres an der Innenwand des Hüllrohres. Zudem muss sowohl der Abstand der einzelnen Anheftpunkte sowie der periphere Abstand zwischen den ARE-Außenrohren möglichst gleichmäßig sein. Dies ist mit der "Stack-and-Draw"-Technik nicht ohne Weiteres zu realisieren.

Eine Vereinfachung in dieser Hinsicht ergibt sich durch eine Technik, bei der ein vorkonfektioniertes Kapillarhalbzeug hergestellt wird, das eine ARE-Außenkapillare und mindestens einer NE-Innenkapillare umfasst, die an der Innenwandung der ARE-Außenkapillare fixiert wird. Diese Technik ist beispielsweise beschrieben im Paper von A. F. Kosolapov, G. K. Alagashev, A. N. Kolyadin, A. D. Pryamikov, A. S. Biriukov, I. A. Bufetov, E. M. Dianov in "Hollow-core revolver fibre with a double-capillary reflective cladding" in Kvantovaya Elektronika, 2016, vol. 46, no. 3, p. 267-270. Die Vorkonfektionierung des Kapillarhalbzeugs besteht hierbei darin, dass ein ARE-Außenrohr aus Quarzglas und ein an dessen Innenwandung angeschweißtes NE-Innenrohr aus Quarzglas gemeinsam zu dem Kapillarhalbzeug elongiert werden. Das elongierte Kapillarhalbzeug setzt sich somit aus einer ARE-Außenkapillare und einer fest mit dieser verbundenen NE-Innenkapillare zusammen. Fünf der elongierten Kapillarhalbzeuge werden an der Innenwandung eines Hüllrohres aus Quarzglas montiert. Für diese Montage wird eine Schablone mit fünfzähliger Symmetrie eingesetzt. Die Kapillarhalbzeuge werden mit der Innenwandung verschmolzen und dieses Ensemble wird zu einer primären Vorform elongiert, aus der anschließend die Hohlkernfaser gezogen wird.

Technische Aufgabenstellung

Das vorkonfektionierte Kapillarhalbzeug hat zwar Vorteile hinsichtlich Montageaufwand und Präzision. Allerdings hat sich gezeigt, dass es beim Elongieren des Bauteil-Ensembles leicht zu ovalen (elliptischen) Verformungen der anfänglich runden Rohrquerschnitte kommen kann. Beim Erweichen und Strecken wird das NE-Innenrohr an der Innenmantelfläche des ARE-Außenrohres angeschmolzen. Infolge dieses Kontakts wirken an der Innenmantelfläche des ARE-Außenrohrs Kräfte, die zu einer Verformung des Querschnitts und zu einer ovalen Querschnittsform führen können.

So hat beim bekannten Verfahren das elongierte Kapillarhalbzeug einen elliptischen Querschnitt mit einer langen Querschnittsachse von 6,28mm und eine kurzen Querschnittsachse vom 6,12mm. Das Achsenlängenverhältnis $A_L/A_K$ der längsten Querschnittsachse $A_L$ und der kürzesten Querschnittsachse $A_K$ beträgt somit 1,026. Dieses Achsenverhältnis wird hier auch als "Ovalität" oder "Ovalitätsgrad" bezeichnet.

Die Ovalität des Kapillarhalbzeuge erschwert die exakte Montage an der Hüllrohr-Innenwandung. So ist beispielsweise die zur Montage eingesetzte Schablone in der Regel auf einen runden Querschnitt ausgelegt. Und sie erschwert die Festlegung seines Außendurchmessers für nachfolgende Ziehprozesse und behindert damit eine exakte und reproduzierbare Vorhersage des Ziehergebnisses in Form der Hohlkernfaser.

Zur Einhaltung der Resonanz- beziehungsweise Antiresonanzbedingungen sind aber bereits geringe Maßabweichungen in der Größenordnung der Arbeitswellenlänge des zu führenden Lichts nicht tolerierbar.

Ein Ziel der Erfindung ist es daher, ein Verfahren zur Herstellung einer Antiresonanten Hohlkernfaser und einer Vorform für Antiresonante Hohlkernfasern bereitzustellen, bei denen die Vorteile des vorkonfektionierten Kapillarhalbzeugs in Bezug auf den Montageaufwand und die Präzision beibehalten werden können, aber die damit einhergehenden Nachteile infolge der Ovalität so gering und vorhersehbar gehalten werden können, dass eine hohe Präzision der Antiresonanzelemente und eine exakte Positionierung in der Hohlkernfasern reproduzierbar erreicht werden kann.

Außerdem soll ein Kapillarhalbzeug mit geringer Ovalität bereitgestellt werden, das eine exakte Positionierung an vorgegebenen azimutalen Positionen des Hüllrohes und eine reproduzierbare Vorhersage des Ziehergebnisses erleichtert.

Darüber hinaus liegt der Erfindung die Aufgabe zugrunde, eine Vorform anzugeben, aus der eine Antiresonante Hohlkernfaser mit möglichst exakt positionierten und geometrisch präzisen Antiresonanzelementen gezogen werden kann.

Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass die Querschnittsabmessungen $OD_{NE}$, $ID_{NE}$, $OD_{ARE}$, $ID_{ARE}$ sowie $OD_{ARE\_cap}$ und $WT_{ARE\_cap}$ derart aufeinander abgestimmt werden, dass die ARE-Außenkapillare (11) des Kapillarhalbzeugs (5) einen Ovalitätsgrad von weniger als 1,025 aufweist.

Ausgangspunkt für die Herstellung der Antiresonanten Hohlkernfaser ist eine Vorform, die hier auch als "primäre Vorform" bezeichnet wird. Die Herstellung der primären Vorform umfasst üblicherweise den Einbau und das Verbinden von Antiresonanzelement-Vorformlingen mit einem Hüllrohr. Mindestens ein Teil der Antiresonanzelement-Vorformlinge liegt in Form eines vorgefertigten Kapillarhalbzeugs mit verschachtelten Antiresonanzelementen vor. Darunter wird hier ein Halbzeug verstanden, das eine ARE-Außenkapillare umfasst, an deren Innenmantelfläche mindestens eine NE-Innenkapillare fixiert ist und die sich parallel zur Außenkapillaren-Längsachse erstreckt. Bei mehrfach verschachtelten Antiresonanzelementen ist an der Innenmantelfläche einer äußeren NE-Innenkapillare mindestens eine weitere, innere NE-Innenkapillare fixiert, die sich ebenfalls parallel zur Außenkapillaren-Längsachse erstreckt. Die ARE-Außenkapillare und die NE-Innenkapillare(n) sind miteinander verschmolzen und bilden Antiresonanzelement-Vorformlinge.

Die unter Einsatz des vorkonfektionierten Kapillarhalbzeugs erzeugte primäre Vorform kann direkt zu der Hohlkernfaser gezogen werden. In der Regel wird die primäre Vorform aber weiterverarbeitet, um daraus eine hier als "sekundäre Vorform" bezeichnete Vorform zu erzeugen. Gegebenenfalls wird die Hohlkernfaser aus der sekundären Vorform gezogen. Die Herstellung der sekundären Vorform umfasst Verfahrensschritte, bei denen Ausgangselemente der Hohlkernfaser hergestellt und zueinander positioniert werden und mindestens einen Heißverformungsschritt.

Die primäre Vorform und die sekundäre Vorform sind entweder monolithische Körper oder sie sind Bestandteil eines koaxialen Ensembles von Bauteilen mit einem Überfangzylinder oder mit mehreren Überfangzylindern, das direkt zu der Hohlkernfaser gezogen wird. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial erfolgt beispielsweise durch Aufkollabieren eines Überfangzylinders auf die primäre Vorform. Die koaxiale Anordnung aus primärer Vorform und Überfangzylinder wird beim Aufkollabieren des Überfangzylinders elongiert oder sie wird nicht elongiert. Dabei werden die Antiresonanzelement-Vorformlinge in ihrer Form oder Anordnung verändert, oder sie werden in ihrer Form oder Anordnung nicht verändert.

Zur Herstellung eines Kapillarhalbzeugs mit einfach verschachtelter NE-Innenkapillare werden Ausgangsrohre mit rundem Querschnitt eingesetzt, die hier als ARE-Außenrohr und als NE-Innenrohr bezeichnet werden. Das NE-Innenrohr wird an der Innenmantelfläche des ARE-Außenrohres fixiert. Die Verbindung erfolgt vorzugsweise an zwei sich gegenüberliegenden stirnseitigen Enden des Ensembles, und sie erfolgt beispielsweise durch konstruktive Haltemittel, und vorzugsweise durch lokales, punktuelles Verkleben oder thermisches Bonden (punktuelles Verschweißen).

Dieses Bauteil-Ensemble wird zonenweise erweicht und zu dem vorkonfektionierten Kapillarhalbzeug gestreckt (elongiert), in dem die ARE-Außenkapillare und die NE-Innenkapillare eine feste, vorgegebene und nachprüfbare Position und Ausrichtung zueinander haben. Durch die Vorkonfektionierung entfallen Positionierungs- und Ausrichtungsmaßnahmen, die andernfalls bei der Montage zur Herstellung der primären Vorform erforderlich wären. Insoweit werden diese Montageschritte erleichtert und die Maßhaltigkeit der Antiresonanzelement-Vorformlinge wird verbessert.

Allerdings hat sich gezeigt, dass es beim Elongieren des Bauteil-Ensembles leicht zu ovalen (elliptischen) Verformungen der anfänglich runden Rohrquerschnitte kommen kann. Dies betrifft zwar auch die NE-Innenkapillare aber insbesondere die ARE-Außenkapillare. Es hat sich gezeigt, dass der Grad der ovalen Verformung der ARE-Außenkapillare wesentlich bestimmt wird von den Querschnittsgeometrien der Ausgangsrohre ($OD_{NE}$, $ID_{NE}$, $OD_{ARE}$, $ID_{ARE}$) und der ARE-Außenkapillare ($OD_{ARE\_cap}$, $WT_{ARE\_cap}$) sowie vom Verjüngungsverhältnis beim thermischen Strecken (das aber auch von den Querschnittsgeometrien von Ausgangsrohren und ARE-Außenkapillare abhängt). Im Vergleich dazu haben Ziehparameter, wie Temperatur, Vorschub- und Abzugsgeschwindigkeit, vergleichsweise geringen Einfluss auf die Ovalität. Andere Ziehparameter, wie Drücke und Gasflüsse, haben hingegen merklichen Einfluss auf die Ovalität der ARE-Außenkapillare. So kann zum Beispiel ein Gasfluss eine lokale Kühlung bewirken, die sich auf die Geometrie der ARE-Außenkapillare auswirkt. Bei ansonsten vorgegebenen Ziehparametern ist die Ovalität der ARE-Außenkapillare hauptsächlich abhängig von den geometrischen Querschnitts-Abmessungen der Ausgangsrohre und der ARE-Außenkapillare.

Die Erfindung gibt die Lehre, wie diese geometrischen Parameter einzustellen sind, damit in einem durch thermisches Strecken erzeugten Kapillarhalbzeug eine vorgegebene maximale Ovalität der ARE-Außenkapillare von beispielsweise 1,025 reproduzierbar eingehalten werden kann.

Bei einer bevorzugten Verfahrensvariante ist vorgesehen, dass die geometrischen Abmessungen im Zusammenhang mit folgenden Faktoren (F1) bis (F4) eingestellt werden:

(F1) das Verhältnis des Gleichgewichtsdrucks $p_{eg\_NE}$ des NE-Innenrohrs und des Gleichgewichtsdrucks $p_{eq\_ARE}$ des ARE-Außenrohrs,

(F2) der Abstand zwischen dem ARE-Außenrohr und dem NE-Innenrohr, bezogen auf den Innendurchmesser des ARE-Außenrohrs $(ID_{ARE}\text{-}OD_{NE})/ID_{ARE}$,

(F3) das Verjüngungsverhältnis $OD_{ARE}/OD_{ARE\_cap}$ beim thermischen Strecken des Kapillarhalbzeug-Ensembles gemäß Verfahrensschritt (b2),

(F4) das Verhältnis $OD_{ARE\_cap}/WT_{ARE\_cap}$ von Außendurchmesser und Wanddicke des Kapillarhalbzeugs.

Der Gleichgewichtsdruck $p_{eq}$ ist derjenige Druck, der beim Elongieren eines Glasrohres notwendig ist, damit das Glasrohr weder kollabiert noch aufgeblasen wird. Der Gleichgewichtsdruck $p_{eq;NE}$ für das NE-Innenrohr ergibt sich aus:

$$p_{eq;NE} \quad = (2/OD_{NE} + 2/ID_{NE}) \times \sigma \qquad\qquad (1),$$

und der Gleichgewichtsdruck $p_{eq;ARE}$ für das ARE-Außenrohr aus:

$$p_{eq,ARE} = (2/OD_{ARE} + 2/ID_{ARE}) \times \sigma \qquad\qquad (2),$$

wobei $\sigma$ die Oberflächenspannung bei der Ziehtemperatur ist, die für Quarzglas mit 0,4 N/m angesetzt werden kann.

Vorteilhafterweise werden die Durchmesserabmessungen für ein ARE-Außenrohr aus Quarzglas beziehungsweise für ein NE-Innenrohr aus Quarzglas so gewählt, dass der Gleichgewichtsdruck $p_{eq,NE}$ im Bereich von 60 bis 90 Pa, bevorzugt im Bereich von 65 bis 80 Pa, und der Gleichgewichtsdruck $p_{eq\_ARE}$ im Bereich von 25 bis 50 Pa, bevorzugt im Bereich von 30 bis 40 Pa liegt.

Das Verhältnis der Gleichgewichtsdrücke $p_{eq;NE}/p_{eq;ARE}$ gemäß Faktor (F1) ist ein Maß für die Wirksamkeit der Oberflächenspannung der Einzelkapillare im Kapillarhalbzeug. Je größer der Wert desto dominierender wirkt die Innenkapillare (NE) auf die Ovalität der Außenkapillare (ARE).

Daher werden die Gleichgewichtsdrücke $p_{eq;NE}$ und $p_{eq;ARE}$ vorteilhafterweise so eingestellt, dass der Faktor (F1) einen Wert im Bereich von 1,5 bis 2,5, vorzugsweise einen Wert im Bereich von 1,5 bis 2 einnimmt.

Je größer der freie Abstand zwischen dem ARE-Außenrohr und dem NE-Innenrohr ist, umso aufwändiger und schwieriger wird zum einen die finale Prozessierung der Faser, da der Innendurchmesser $ID_{NE\_cap}$ mit größerem freien Abstand zur ARE-Außenkapillare kleiner wird. Damit wird beispielsweise eine hochtemperaturfeste Verbindung mit einem Druckanschluss technologisch aufwändiger. Zum anderen wird das Verhältnis der Gleichgewichtsdrücke mit größerem freien Abstand des ARE-Außenrohrs zum NE-Innenrohr größer.

Im Hinblick darauf hat es sich als vorteilhaft erwiesen, wenn der Faktor (F2) auf einen Wert im Bereich von 0,2 bis 0,5, vorzugsweise auf einen Wert im Bereich von 0,3 bis 0,4 eingestellt wird.

Zur Verminderung absoluter Geometriefehler ist ein großes Verjüngungsverhältnis $OD_{ARE}/OD_{ARE\_cap}$ beim thermischen Strecken erwünscht. Andererseits geht ein großes Ausziehverhältnis mit entsprechend großen Umformprozessen und Materialbewegungen einher, was leicht zu unerwünschten Deformationen bei den filigranen Antiresonanzelement-Vorformlingen führen kann.

Als geeigneter Kompromiss hat sich erwiesen, wenn das Verjüngungsverhältnis gemäß Faktor (F3) auf einen Wert im Bereich von 5 bis 10, vorzugsweise auf einen Wert im Bereich von 5 bis 8 eingestellt wird.

Das Verhältnis $OD_{ARE\_cap}/WT_{ARE\_cap}$ von Außendurchmesser und Wanddicke des Kapillarhalbzeugs ist ein Maß für die Formstabilität des Kapillarhalbzeugs. Je dünner die Wand im Vergleich zum Außendurchmesser ist, desto leichter erfolgt die Verformung.

Im Hinblick auf eine möglichst geringe Ovalität hat es sich bewährt, wenn der Faktor (F4) auf einen Wert im Bereich von 15 bis 25, vorzugsweise auf einen Wert im Bereich von 15 bis 20 eingestellt wird.

Zudem liefern die gemessenen Werte einen Anhaltspunkt für die Maßhaltigkeit des Kapillarzuges.

Bei einer besonders bevorzugten Verfahrensvariante werden die Faktoren (F1) bis (F4) derart eingestellt, dass das Kapillarhalbzeug einen Ovalitätsgrad von weniger als 1,020 aufweist.

Es hat sich gezeigt, dass das mathematische Produkt der Faktoren (F1) bis (F4) ein Maß für den Ovalitätsgrad ist. Je kleiner das Produkt ist, umso geringer ist die Ovalität der ARE-Außenkapillare im Kapillarhalbzeug. Dieses Maß wird im Folgenden als "geometrischer Parameter" (P(geom.)) bezeichnet.

$$P(geom.) = \frac{peq_{NE}}{Peq_{ARE}} \; x \; \frac{ID(ARE) - OD(NE)}{ID(ARE)} \; x \; \frac{OD(ARE)}{OD(ARE)_{cap}} \; x \; \frac{OD(ARE)_{cap}}{WT(ARE)_{cap}} \hfill (3)$$

Jeder einzelne der Faktoren (F1) bis (F4) hat Einfluss auf den geometrischen Parameter. Je kleiner der Faktor ist, umso geringer ist sein Beitrag zur Ovalität der ARE-Außenkapillare. Anhand des geometrischen Parameters kann der Fachmann verlässlich abschätzen, wie sich die Querschnittsabmessungen der Ausgangsrohre (NE-Innenrohr und ARE-Außenrohr) bei welchem geplanten Verjüngungsverhältnis auf den Ovalitätsgrad auswirken werden. Empirische Versuche und Fehlschläge können so verhindert oder mindestens deren Zahl verringert werden. So ist beispielsweise bei einem geometrischen Parameter von 94 mit einer Ovalität von 1,04 zu rechnen. Soll die Ovalität kleiner sein als 1,025 darf der geometrischen Parameter nicht mehr als 77,5 betragen. Ist nur eine Ovalität von 1,010 akzeptabel, so ist der geometrischen Parameter auf 55 oder weniger einzustellen.

Zur Erzielung einer geringen Ovalität wird der geometrischen Parameter somit auf einen Wert im Bereich von 35 bis 75, vorzugsweise im Bereich von 40 bis 60 eingestellt.

Gerade bei derartig mehrfach verschachtelten Kapillarhalbzeugen wird der Aufwand für die Positionierung und Ausrichtung im Vergleich zu Einzel-Bauteilen deutlich verringert.

Bei seiner Weiterverarbeitung zu einer primären Vorform werden mehrere vorkonfektionierte Kapillarhalbzeuge an der Innenmantelfläche eines Hüllrohres montiert.

Die anhand des Verfahrens herzustellende primäre Vorform hat vorzugsweise einen Außendurchmesser im Bereich von 26 bis 230 mm, besonders bevorzugt im Bereich von 30 bis 200 mm.

Beim Elongieren der primären Vorform zu der Hohlkernfasern oder zu einer sekundären Vorform wird zusätzliches Mantelmaterial aufgebracht, oder es wird kein zusätzliches Mantelmaterial aufgebracht. Beim Elongieren wird die primäre Vorform in einer Heizzone zonenweise erhitzt. Je größer der Durchmesser ist, umso langsamer ist die Nachführgeschwindigkeit in die Heizzone und umso länger ist die Dauer, der jedes axiale Teilstück der Vorform der hohen Temperatur der Heizzone ausgesetzt ist. Bei zu langsamer Nachführgeschwindigkeit beim Elongieren deformieren jedoch die Antiresonanzelement-Vorformlinge. Daher liegt der Durchmesser der primären Vorform vorzugsweise bei maximal 230 mm, vorzugsweise maximal 200mm. Und der Durchmesser der primären Vorform beträgt vorzugsweise mindestens 26 mm, besonders bevorzugt mindestens 30 mm. Denn es hat sich gezeigt, dass bei kleineren Durchmessern die thermische Trägheit der Vorform zu gering ist, um etwaige Temperaturschwankungen in der Heizzone auszugleichen.

Beim Ziehen der primären Vorform oder der sekundären Vorform gemäß Verfahrensschritt (d) zu einer Hohlkernfaser wird vorzugsweise in der ARE-Außenkapillare und in der NE-Innenkapillare ein Überdruck gegenüber dem elongierten hohlen Kernbereich erzeugt und aufrechterhalten. Der Druck in der ARE-Außenkapillare ist dabei in der Regel von dem Druck in der NE-Innenkapillare verschieden. Es wird eine Hohlkernfaser mit hohlem Kernbereich und einem inneren Mantelbereich erhalten, in dem die vormalige ARE-Außenkapillare ein Antiresonanzelement mit vorzugsweise kreisrundem oder mit gering ovalem Querschnitt bildet.

Die Exaktheit der Positionierung der Vorformlinge an der Innenmantelfläche des Hüllrohres wird weiter verbessert, indem die Hüllrohr-Innenseite und/oder die Hüllrohr-Außenseite und/oder die ARE-Außenrohr-Innenseite und/oder die ARE-Au-ßenrohr-Außenseite durch spanende Bearbeitung erzeugt wird, insbesondere durch Bohren, Fräsen, Schleifen, Honen und/oder Polieren.

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Es hat sich außerdem eine Verfahrensweise bewährt, bei der das ARE-Außenrohr aus Quarzglas besteht, das mindestens einen Dotierstoff enthält, der die Viskosität von Quarzglas absenkt und/oder dass das mindestens eine NE-Innenrohr aus Quarzglas besteht, das mindestens einen Dotierstoff enthält, der die Viskosität von Quarzglas erhöht.

Als die Viskosität von Quarzglas absenkende Dotierstoffe kommen vorzugsweise Fluor, Chlor und/oder Hydroxylgruppen zum Einsatz. Als die Viskosität von Quarzglas erhöhende Dotierstoffe gelten $Al_2O_3$ (bis zu einer Konzentration von 15 Gew.ppm) und Stickstoff.

Die Dotierung ermöglicht die Anpassung der thermischen Ausdehnungskoeffizienten von benachbarten Vorform-Bestandteilen, um Spannungen zu vermeiden oder zu vermindern. Sie kann auch dazu eingesetzt werden, die thermische Stabilität des ARE-Außenrohres gegenüber derjenigen des mindestens einen verschachtelten NE-Innenrohres zu verringern.

In dieser Hinsicht ist es beispielsweise vorteilhaft, wenn das Quarzglas des ARE-Außenrohres bei einer Messtemperatur von 1250 °C eine um mindestens 0,1 dPa·s geringere Viskosität, vorzugsweise eine um mindestens 0,2 dPa·s, geringere Viskosität, aufweist als das Quarzglas des verschachtelten NE-Innenrohres (bei Angabe der Viskosität als logarithmischer Wert in dPa·s).

Bei einer bevorzugten Verfahrensweise wird die Genauigkeit der Positionierung der Kapillarhalbzeuge im Hüllrohr weiter dadurch verbessert, dass die ARE-Au-ßenkapillare eine Wandstärke im Bereich von 0,2 und 3 mm, vorzugsweise eine Wandstärke im Bereich von 0,25 und 1 mm, hat, und wobei ein Hüllrohr mit einem Außendurchmesser im Bereich von 90 und 230 mm und vorzugsweise mit einem Außendurchmesser im Bereich von 120 bis 200 mm eingesetzt wird. Diese Bauteile haben dabei jeweils eine Länge von mindestens 700mm, bevorzugt mindestens 1 m. Hierbei handelt es sich um relativ großvolumige Strukturelemente, was deren Handhabung vereinfacht. Zudem unterstützt bei vertikaler Anordnung von Hüllrohr und Kapillarhalbzeug die Gravitationskraft die Parallelität und die vertikale Ausrichtung der Kapillar-Längsachsen, wenn die Kapillarhalbzeuge jeweils an ihrem oberen stirnseitigen Ende an der Soll-Position positioniert und fixiert sind.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass die geometrischen Abmessungen $OD_{NE}$, $ID_{NE}$, $OD_{ARE}$, $ID_{ARE}$ sowie $OD_{ARE\_cap}$ und $WT_{ARE\_cap}$ derart eingestellt werden, dass die ARE-Außenkapillare des Kapillarhalbzeugs einen Ovalitätsgrad von weniger als 1,025 aufweist.

Zu diesem Zweck wird ein vorkonfektioniertes Kapillarhalbzeug bereitgestellt, bei dem eine ARE-Außenkapillare mit mindestens einer NE-Innenkapillare verschmolzen ist, und in dem die ARE-Außenkapillare und die NE-Innenkapillare eine feste, vorgegebene und nachprüfbare Position und Ausrichtung zueinander haben.

Durch die Vorkonfektionierung entfallen Positionierungs- und Ausrichtungsmaßnahmen, die andernfalls bei der Montage zur Herstellung der primären Vorform erforderlich wären. Insoweit werden diese Montageschritte erleichtert und die Maßhaltigkeit der Antiresonanzelement-Vorformlinge wird verbessert.

Die Herstellung vorkonfektionierten Kapillarhalbzeugs umfasst ein thermisches Strecken eines Bauteil-Ensembles aus ARE-Außenrohr und NE-Innenrohr, bei dem es leicht zu ovalen (elliptischen) Verformungen der anfänglich runden Rohrquerschnitte kommen kann. Dies betrifft die NE-Innenkapillare aber insbesondere die ARE-Außenkapillare. Im thermodynamischen Gleichgewicht wird der Grad der ovalen Verformung der ARE-Außenkapillare wesentlich bestimmt von den Querschnittsgeometrien der Ausgangsrohre ($OD_{NE}$, $ID_{NE}$, $OD_{ARE}$, $ID_{ARE}$) und der ARE-Außenkapillare ($OD_{ARE\_cap}$, $WT_{ARE\_cap}$) sowie vom Verjüngungsverhältnis beim thermischen Strecken (das aber auch von den Querschnittsgeometrien von Ausgangsrohren und ARE-Außenkapillare abhängt). Im Vergleich dazu haben Ziehparameter, wie Temperatur, Vorschub- und Abzugsgeschwindigkeit vergleichsweise geringen Einfluss auf die Ovalität. Andere Ziehparameter, wie Drücke und Gasflüsse, haben hingegen merklichen Einfluss auf die Ovalität der ARE-Außenkapillare. So kann zum Beispiel ein Gasfluss eine lokale Kühlung bewirken, die sich auf die Geometrie der ARE-Außenkapillare auswirkt. Bei ansonsten vorgegebenen Ziehparametern ist die Ovalität der ARE-Außenkapillare jedoch hauptsächlich abhängig von den geometrischen Querschnitts-Abmessungen der Ausgangsrohre und der elongierten ARE-Außenkapillare.

Die Erfindung gibt die Lehre, wie diese geometrischen Parameter einzustellen sind, damit in einem durch thermisches Strecken erzeugten Kapillarhalbzeug eine vorgegebene maximale Ovalität der ARE-Außenkapillare von beispielsweise 1,025 reproduzierbar eingehalten werden kann.

Maßnahmen zur Herstellung der Vorform sind weiter oben im Zusammenhang der Herstellung der Hohlkernfaser erläutert und diese Erläuterungen werden hiermit einbezogen.

Hinsichtlich des vorkonfektionierten Kapillarhalbzeugs als Zwischenprodukt für die Herstellung einer Antiresonanten Hohlkernfaser wird die oben angegebene technische Aufgabe ausgehend von einem Kapillarhalbzeug der eingangs genannten Gattung erfindungsgemäß dadurch gelöst, dass die ARE-Außenkapillare einen Ovalitätsgrad von weniger als 1,025 aufweist.

Im vorkonfektionierten Kapillarhalbzeug sind mindestens zwei Kapillare integral miteinander verbunden und bilden ein rohrförmiges Bauteil. Durch die Vorkonfektionierung entfallen Positionierungs- und Ausrichtungsmaßnahmen, die andernfalls bei der Montage zur Herstellung der primären Vorform erforderlich wären. Insoweit werden diese Montageschritte erleichtert und die Maßhaltigkeit der Antiresonanzelement-Vorformlinge wird verbessert.

Der Querschnitt der ARE-Außenkapillare des Kapillarhalbzeugs ist kreisrund oder allenfalls hat allenfalls einen geringen Ovalitätsgrad von weniger als 1,025, bevorzugt weniger als 1,020. Dadurch werden die exakte Positionierung des Kapillarhalbzeugs an der Hüllrohr-Innenwandung und die Festlegung seines Außendurchmessers für nachfolgende Ziehprozesse sowie eine exakte und reproduzierbare Vorhersage des Ziehergebnisses sowie eine präzisere Fertigung der Hohlkernfaser erleichtert.

Das Kapillarhalbzeug und Maßnahmen zur Herstellung des Kapillarhalbzeugs sind weiter oben im Zusammenhang der Herstellung der Hohlkernfaser erläutert und diese Erläuterungen werden hiermit einbezogen.

Hinsichtlich der Vorform wird die oben genannte technische Aufgabe ausgehend von einer Vorform der eingangs genannten Gattung erfindungsgemäß dadurch gelöst, dass mindestens ein Teil der Antiresonanzelement-Vorformlinge als Kapillarhalbzeug gemäß der Erfindung ausgebildet ist.

Bei der Vorform handelt es sich um eine primäre Vorform im Sinne der Erfindung. Der Mantelbereich der Vorform umfasst das Hüllrohr, das von mindestens einem weiteren Mantelrohr umhüllt sein kann. An der Innenseite des Hüllrohres sind Antiresonanzelement-Vorformlinge angeordnet und mit dieser beispielsweise durch Ankleben oder thermisches Bonden verbunden. Mindestens ein Teil dieser Antiresonanzelement-Vorformling, vorzugsweise sind es alle Antiresonanzelement-Vorformling, liegt in Form eines vorkonfektionierten Kapillarhalbzeugs, bei dem mindestens zwei Kapillare integral miteinander verbunden sind. Durch die Vorkonfektionierung entfallen Positionierungs- und Ausrichtungsmaßnahmen, die andernfalls bei der Montage zur Herstellung der primären Vorform erforderlich wären. Insoweit werden diese Montageschritte erleichtert und die Maßhaltigkeit der Antiresonanzelement-Vorformlinge wird verbessert.

Der Querschnitt der ARE-Außenkapillare des Kapillarhalbzeugs ist kreisrund oder hat allenfalls einen geringen Ovalitätsgrad von weniger als 1,025, bevorzugt weniger als 1,020. Dadurch werden die exakte Positionierung des Kapillarhalbzeugs an der Hüllrohr-Innenwandung und die Festlegung seines Außendurchmessers für nachfolgende Ziehprozesse sowie eine exakte und reproduzierbare Vorhersage des Zieherergebnisses sowie eine präzisere Fertigung der Hohlkernfaser erleichtert.

Das Kapillarhalbzeug und Maßnahmen zur Herstellung des Kapillarhalbzeugs sind weiter oben erläutert und diese Erläuterungen werden hiermit einbezogen.

Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

Antiresonanzelemente

Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem $SiO_2$, einem Kunststoff, insbesondere aus einem Polymer, aus einem Verbundwerkstoff oder aus kristallinem Material.

Antiresonanzelement-Vorformling

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Verschachtelte Antiresonanzelement-Vorformlinge bilden in der Hohlkernfaser verschachtelte Antiresonanzelemente. Sie setzen sich zusammen aus einem ARE-Außenrohr und mindestens einem weiteren Strukturelement, das in der Innenbohrung des ARE-Außenrohres angeordnet ist. Bei dem weiteren Strukturelement kann es sich um ein weiteres Rohr handeln, das an der Innenmantelfläche des Außenrohres anliegt. Das weitere Rohr wird als "Nested Element" oder kurz als "NE- Innenrohr" oder auch als "verschachteltes NE-Innenrohr" bezeichnet.

In der Innenbohrung des NE-Innenrohres kann bei mehrfach verschachtelten Antiresonanzelement-Vorformlingen mindestens ein weiteres Strukturelement angeordnet sein, beispielsweise ein an der Innenmantelfläche des verschachtelten NE-Innenrohres anliegendes, drittes Rohr. Um bei mehrfach verschachtelten Antiresonanzelement-Vorformlingen zwischen den mehreren Rohren zu unterscheiden, die innerhalb des ARE-Außenrohres angeordnet sind, wird gegebenenfalls zwischen "äußerem NE-Innenrohr" und "innerem NE-Innenrohr" unterschieden.

Der Begriff "Querschnitt" in Verbindung mit zylinderförmigen Antiresonanzelement-Vorformlingen, deren zylinderförmigen Strukturelementen und dem Kapillarhalbzeug bezeichnet stets den Querschnitt senkrecht zur jeweiligen Zylinderlängsachse, und zwar - sofern nichts anderes angegeben - bei rohrförmigen Bauteilen den Querschnitt der Außenkontur (nicht: den Querschnitt der Innenkontur).

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling bezeichnet.

Vorform / primäre Vorform / sekundäre Vorform / Kernvorform (Cane)

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die primäre Vorform kann als Ensemble aus mindestens einem Hüllrohr und darin lose aufgenommenen oder fest fixierten Vorformlingen oder Vorstufen für Antiresonanzelemente vorliegen. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:

(i) Elongieren,

(ii) Kollabieren,

(iii) Kollabieren und gleichzeitiges Elongieren,

(iv) Aufkollabieren von zusätzlichem Mantelmaterial,

(v) Aufkollabieren von zusätzlichem Mantelmaterial und anschließendes Elongieren,

(vi) Aufkollabieren von zusätzlichem Mantelmaterial und gleichzeitiges Elongieren.

Als Kernvorform (engl. Cane) wird in der Literatur eine Vorform bezeichnet, die durch Kollabieren und/oder Elongieren einer primären Vorform erhalten wird und die damit unter die Definition der sekundären Vorform fällt. Typischerweise wird sie vor oder beim Ziehen der Hohlkernfaser mit zusätzlichem Mantelmaterial überfangen.

Elongieren / Kollabieren

Beim Elongieren wird die primäre Vorform thermisch getreckt. Die Streckung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im gestreckten, elongierten Endprodukt widerspiegeln. Beim Elongieren kann die primäre Vorform aber auch nicht-maßstäblich gezogen und ihre Geometrie verändert werden.
Beim Kollabieren wird eine Innenbohrung verengt oder Ringspalte zwischen rohrförmigen Bauteil werden geschlossen oder verengt. Das Kollabieren geht in der Regel mit einem Elongieren einher.

Hohlkern / Innerer Mantelbereich / Äußerer Mantelbereich

Das Ensemble aus mindestens einem Hüllrohr und darin lose aufgenommenen oder fest fixierten ARE-Vorformlingen wird hier auch als "primäre Vorform" bezeichnet. Die primäre Vorform umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf das Ensemble erzeugt worden ist, und wenn zwischen diesen Mantelbereichen unterschieden werden soll. Die Bezeichnungen "innerer Mantelbereich" und "äu-ßerer Mantelbereich" werden auch für die entsprechenden Bereiche in der Hohlkernfaser oder in Zwischenprodukten genutzt, die durch Weiterverarbeitung der primären Vorform erhalten werden.
Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

Gleichgewichtsdruck

Der Gleichgewichtsdruck $p_{eq}$ ist derjenige Druck, der beim Elongieren eines Glasrohres notwendig ist, damit das Glasrohr weder kollabiert noch aufgeblasen wird.
Die Berechnung erfolgt laut K. Schuster; J. Kobelke; A. Schwuchow; M. Leich; M. Becker; M. Rothhardt; U. Röpke; J. Kirchhof; H. Bartelt; T. Geernaert in "Preparation and applications of germanium and fluorine doped microstructured fibers"; Proc. SPIE 6588, Photonic Crystal Fibers, 658804 (22 May 2007); doi: 10.1117/12.722470; auf Basis des Innenradius (rinnen) und des Außenradius ($r_{außen}$) des Glasrohres nach folgender Formel:

$$p_{eq} = (1/r_{außen} + 1/r_{innen}) \times \sigma \qquad (4),$$

wobei $\sigma$ die Oberflächenspannung bei der Ziehtemperatur bezeichnet. Für Quarzglas bei Ziehtemperatur kann $\sigma = 0{,}4$ N/m angesetzt werden.

Ovalitätsgrad

Der Ovalitätsgrad beträgt 1 bei einem Rohr mit kreisrundem Querschnitt. Bei einem Rohr mit elliptischem Querschnitt ergibt sich der Ovalitätsgrad aus dem Verhältnis der längsten Querschnittsachse $A_L$ und der kürzesten Querschnittsachse $A_K$. Der Ovalitätsgrad des Kapillarhalbzeugs ergibt sich aus dem Ovalitätsgrad seiner ARE-Außenkapillare.

Ausführungsbeispiel

Nachfolgend wird die Erfindung anhand eines Ausführungsbeispiels und einer Zeichnung näher erläutert. Im Einzelnen zeigt

**Figur 1**       ein Foto eines losen Ensembles aus ARE-Außenrohr und NE-Innenrohr zur Herstellung eines Kapillarhalbzeugs in einer Ansicht auf den Querschnitt,

**Figur 2**       ein Foto des Ensembles aus ARE-Außenrohr und NE-Innenrohr von Figur 1 nach dem Fixieren der Rohrenden miteinander anhand eines thermischen Fügeprozesses,

**Figur 3**       eine Skizze zur Erläuterung eines Verfahrensschritts zur Herstellung eines Kapillarhalbzeugs unter Einsatz des Ensembles von Figur 2,

**Figur 4a**     Querschnitte mehrerer Ensembles zur Herstellung von Kapillarhalbzeugen in idealisierter Form,

**Figur 4b**     Fotos von Querschnitten der anhand der Ensembles von Figur 4a erzeugten Kapillarhalbzeuge,

**Figur 5**       ein Diagramm zur Erläuterung des Zusammenhangs von Ovalitätsgrad und geometrischem Parameter, und

**Figur 6**       eine schematische Darstellung einer unter Einsatz mehrerer Kapillarhalbzeuge gefertigten primären Vorform im Querschnitt.

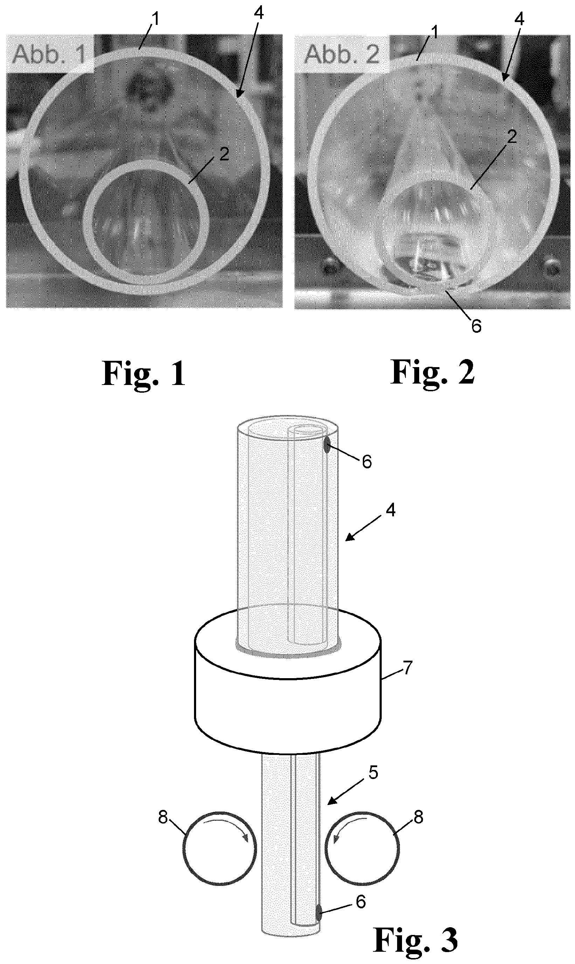

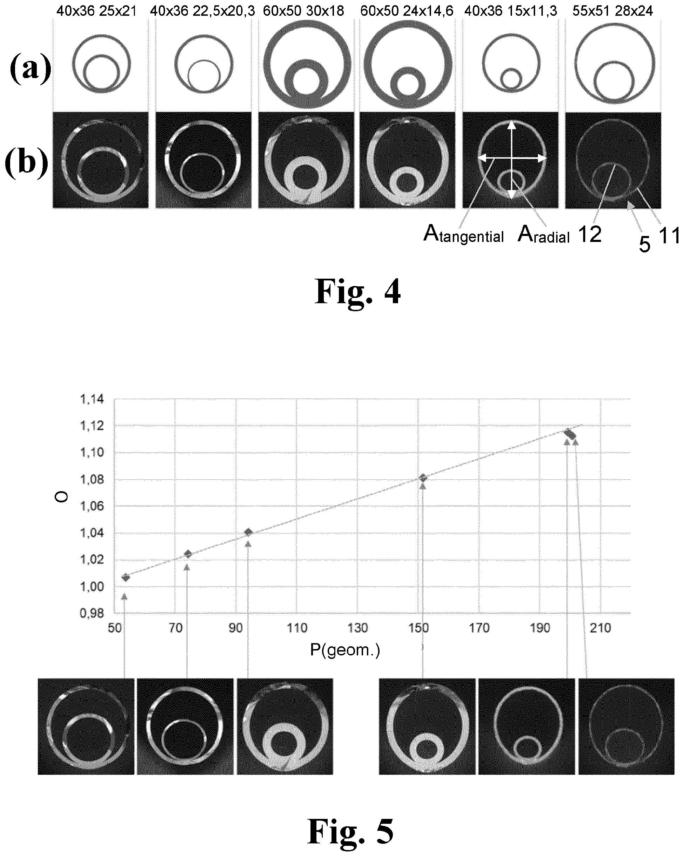

**Figur 1** zeigt ein Vorprodukt für die Herstellung eines vorkonfektionierten Kapillarhalbzeugs. Das Vorprodukt liegt in Form eines losen Ensembles 4 mehrerer miteinander verschachtelter Ausgangsrohre vor, nämlich einem ARE-Außenrohr 1 und einem NE-Innenrohr 2. Alle Rohre (1; 2) bestehen aus Quarzglas und haben einen kreisrunden Querschnitt. Ihre Längsachsen verlaufen parallel und in der gegebenen Ansicht senkrecht zur Papierebene. Das NE-Innenrohr 2 liegt mit seiner Außenmantelfläche an der Innenmantelfläche des ARE-Außenrohres 1. Die Ausgangsrohre (1; 2) unterscheiden sich in ihren Durchmessern, aber die Wanddicken und Längen sind im Wesentlichen gleich. Figur 4a und Tabelle 1 enthalten detaillierte Angaben zu den radialen Abmessungen der Ausgangsrohre (1; 2) und von Ausgangsrohren weiterer Ensembles.
Die Ausgangsrohre (1; 2) werden im Bereich der beiden Stirnseiten punktuell miteinander verschmolzen. Die lokalen Verbindungsstellen sind in **Figur 2** mit der Bezugsziffer 6 markiert.
**Figur 3** zeigt schematisch einen Verfahrensschritt zur Weiterverarbeitung des Ensembles 4 zu dem Kapillarhalbzeug 5. Das anhand der Verbindungsstellen 6 fixierte Ausgangsrohr-Ensemble 4 wird mit vertikal orientierten Längsachsen von oben nach unten einer ringförmigen Heizzone 7 zugeführt, darin zonenweise erweicht, und aus dem erweichten Bereich wird mittels Abzugsrollen 8 ein Strang (5) abgezogen, von dem Kapillarhalbzeuge 5 abgeschnitten werden. Während des Streckvorgangs wird die Innenbohrung des Kapillarhalbzeugs mit einem konstanten Heliumgasstrom von 25ml/min durchspült. Die Innenbohrungen der Ausgangsrohre (1; 2) bleiben während dieses Prozesses offen, so dass sich darin etwa der gleiche Innendruck einstellt.
Nach dem Erweichungs- und Streckungsprozess werden Kapillarhalbzeuge 5 erhalten, in denen die ehemaligen Ausgangsrohre (1; 2) elongiert und entlang ihrer Kontaktflächen miteinander verschmolzen sind. Sie haben infolge der im erweichten Bereich wirksamen Oberflächenspannung ihre Querschnittsform in Richtung einer ovalen Form verändert.
Dies zeigt der Vergleich der idealisierten Darstellung der Ensembles 4 von Proben 1 bis 6 aus **Figur 4a** mit den Fotos der daraus erzeugten Kapillarhalbzeuge von **Figur 4b.** In den Kapillarhalbzeugen 5 bildet das ehemalige ARE-Außenrohr (1) eine ARE-Außenkapillare 11, und das ehemalige NE-Innenrohr (2) bildet eine verschachtelte NE-Innenkapillare 12. Alle Kapillaren (11; 12) zeigen eine mehr oder weniger ovale Querschnittsfläche. Bei einem der Kapillarhalbzeuge sind beispielhaft Bemaßungspfeile eingezeichnet, wobei der Maßpfeil $A_{radial}$ den Außendurchmesser der ARE-Außenkapillare 11, gemessen an der Berührungsstelle mit der verschachtelten NE-Innenkapillare 12 bezeichnet. Dies ist hier gleichzeitig der maximale Außendurchmesser der ARE-Außenkapillare 11. Der Maßpfeil $A_{tangential}$ bezeichnet die Querschnittsabmessung der ARE-Außenkapillare 11, gemessen senkrecht zu $A_{radial}$. Diese Abmessung entspricht hier gleichzeitig dem minimalen Außendurchmesser der ARE-Außenkapillare 11. Bei den anderen Kapillarhalbzeugen werden $A_{radial}$ und $A_{tangential}$ analog ermittelt.
In Tabelle 1 sind die geometrischen Querschnittsabmessungen der Ausgangsrohre (1; 2) für Proben 1 bis 6 und der daraus elongierten Kapillarhalbzeuge sowie die anhand dieser Daten berechneten Faktoren 1 bis 4 der obigen Gleichung (3) für den geometrischen Parameter eingetragen.

Tabelle 1

| Querschnitts- abmessungen - Faktoren | Probe 1 | Probe 2 | Probe 3 | Probe 4 | Probe 5 | Probe 6 |
|---|---|---|---|---|---|---|
| OD_ARE [mm] | 40,0 | 40,0 | 60,0 | 60,0 | 40,0 | 55,0 |
| ID_ARE [mm] | 36,0 | 36,0 | 50,0 | 50,0 | 36,0 | 51,0 |
| OD_NE [mm] | 25,0 | 22,5 | 30,0 | 24,0 | 15,0 | 28,0 |
| ID_NE [mm] | 21,0 | 20,3 | 18,0 | 14,6 | 11,3 | 24,0 |
| | | | | | | |
| Vorschub [mm/min] | 15 | 15 | 9,1 | 10,8 | 15 | 10 ...11 |
| Ofen-Temperatur [°C] | 1985 | 1900 | 2000 | 1970 | 1900 | 1970 ... 2 020 |
| Ofenrohrlänge [mm] | 220 | 220 | 220 | 220 | 220 | 220 |
| Abzug [mm/min] | 466,2 | 515,5 | 667,1 | 779,6 | 597,7 | 645,5 - 666,1 |
| | | | | | | |
| OD_ARE_cap [mm] | 7,46 | 6,91 | 7,9 | 7,95 | 6,94 | 7,7- 7,35 |
| WT_ARE_cap [mm] *1) | 0,37 | 0,35 | 0,66 | 0,66 | 0,35 | 0,28- 0,27 |
| | | | | | | |
| $P_{eq\_ARE}$ [Pa]? | 42,22 | 42,22 | 29,33 | 29,33 | 42,22 | 30,23 |
| $P_{eq\_NE}$ [Pa]? | 70,10 | 74,96 | 71,11 | 88,13 | 124,13 | 61,90 |
| Faktor 1: $P_{eq\_NE}$/ $p_{eq\_ARE}$ | 1,66 | 1,78 | 2,42 | 3,00 | 2,94 | 2,05 |
| Faktor 2: (ID_ARE - OD_NE)/ID_ARE | 0,31 | 0,38 | 0,40 | 0,52 | 0,58 | 0,45 |
| Faktor 3: OD_ARE/OD_ARE_cap | 5,36 | 5,79 | 7,59 | 7,55 | 5,76 | 7,14-7,48 |
| Faktor 4: OD_ARE_cap/WT_ ARE_cap | 20,00 | 20,00 | 12,00 | 12,00 | 20,00 | 27,5 - 27,2 |
| | | | | | | |
| Geometrischer Parameter | 54,4 | 77,1 | 88,4 | 141,5 | 197,7 | 181 -190 |
| Ovalität - $A_{radial}$/$A_{tangential}$ | 1,008 | 1,022 | 1,043 | 1,083 | 1,117 | 1,115 |
| | | | | | | |
| CSA_ARE [mm$^2$] | 238,8 | 238,8 | 863,9 | 863,9 | 238,8 | 333,0 |
| CSA_ARE_cap [mm$^2$] | 8,30 | 7,13 | 14,98 | 15,17 | 7,19 | 5,95 |
| CSA_ARE/CSA_ARE_ cap | 28,75 | 33,51 | 57,68 | 56,96 | 33,22 | 56,00 |

Dabei bedeuten:

| | |
|---|---|
| OD_ARE: | Außendurchmesser des ARE-Außenrohrs |
| ID_ARE: | Innendurchmesser des ARE-Außenrohr |
| OD_NE: | Außendurchmesser des NE-Innenrohrs |
| ID_NE: | Innendurchmesser des NE-Innenrohrs |
| OD_ARE_cap: | Außendurchmesser der ARE-Außenkapillare |
| WT_ARE_cap: | Wanddicke der ARE-Außenkapillare |
| $p_{eq\_ARE}$: | Gleichgewichtsdruck des ARE-Außenrohres gemäß Formel (2) mit $\sigma$=400N/mm |
| $p_{eq\_NE}$: | Gleichgewichtsdruck des NE-Innenrohres gemäß Formel (1) mit $\sigma$=400N/mm |
| $A_{radial}$: | lange Ellipsenachse der ARE-Außenkapillare |
| $A_{tangential}$: | kurze Ellipsenachse der ARE-Außenkapillare |
| CSA_ARE | Querschnittsfläche des ARE-Außenrohre |

CSA_ARE$_{cap}$    Querschnittsfläche der ARE-Außenkapillare

[1]) Hierbei handelt es sich nicht um Messdaten, sondern unter Annahme eines Verhältniszugs (maßstabsgetreue Durchmesserverringerung durch das Elongieren) errechnete Durchmesser-Sollwerte.

Bei den Proben 1 und 2 ist der geometrische Parameter kleiner als 77,5 und die Ovalität liegt unterhalb von 1,025. Es handelt sich um Beispiele der Erfindung; die Proben 3 bis 6 sind Vergleichsbeispiele.

Im Diagramm von **Figur 5** ist der an den Kapillarhalbzeugen der Proben 1 bis 6 ermittelte Ovalitätsgrad "O" gegen den dimensionslosen geometrischen Parameter "P(geom.)" aufgetragen. Demnach skalieren Ovalitätsgrad und geometrischer Parameter sehr gut, und zwar weitgehend unabhängig von der Ziehtemperatur und den Geschwindigkeiten von Vorschub und Abzug. Die Geradengleichung für die Regressionsgerade lautet. y= 0,9682 + 0,008x mit $R^2$=0,9886. Dieser Zusammenhang ermöglicht somit durch Vorgabe der geometrischen Querschnittsabmessungen eine gezielte Einstellung beziehungsweise eine Vorhersage der voraussichtlichen Ovalität des Kapillarhalbzeugs.

Die dem linearen Zusammenhang gehorchenden Proben 1 bis 7 haben eine mittlere bis große Wandstärke. Genauer gesagt, decken sie einen große Spanne von 238,8 bis 863,9 mm$^2$ für die Querschnittsflächen (CSA - Cross Sectional Area) der ARE-Außenrohre und einen ebenfalls großen Bereich von 5,95 bis 15,17 mm$^2$ für die Querschnittsflächen der ARE-Außenkapillaren ab. Die Querschnittsflächenverhältnisse (CSA_ARE/CSA_ARE$_{cap}$) liegen dabei im Bereich von 28,75 bis 57,68.

Es ist nicht auszuschließen, dass bei sehr dünnwandigen Proben mit größerem Oberflächen/Volumen-Verhältnis andere Effekte an Einfluss gewinnen, wie beispielsweise das Aufheiz- und Abkühlverhalten der Probe, die zu einer etwas anderen Regressionsgeraden führen könnten. Die Ovalität der Proben mit Querschnittsflächenverhältnissen (CSA_ARE/CSA_ARE$_{cap}$) oberhalb von 25; insbesondere oberhalb von 28 lässt sich jedenfalls mit der oben angegebenen Geradengleichung sehr gut vorhersagen.

Bei den Proben 1 bis 6 bestehen die Ausgangsrohre aus nicht dotiertem Quarzglas. Der lineare Zusammenhang gemäß Formel (3) gilt auch für dotiertes Quarzglas. Gegebenenfalls führt eine andere Oberflächenspannung zu einem anderen Gleichgewichtsdruck gemäß Faktor (F1).

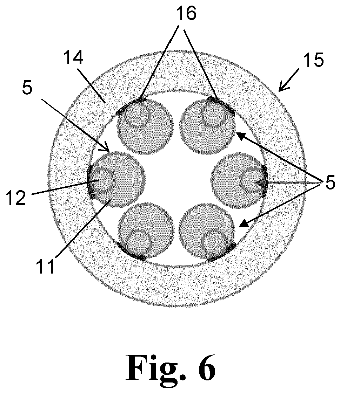

**Figur 6** zeigt schematisch einen Querschnitt einer unter Einsatz des KapillarHalbzeugs 5 von Probe 1 (Tabelle 1) aufgebauten primären Vorform 15. Diese stellt ein Zwischenprodukt zur Herstellung der Hohlkernfaser dar. Die primäre Vorform 15 setzt sich zusammen aus einem Hüllrohr 14 aus Quarzglas mit einer Länge von 1000 mm, einem Außendurchmesser von 30 mm und einem Innendurchmesser von 24 mm. Alle Kapillar-Halbzeuge 5 liegen jeweils als gefügtes Ensemble miteinander verschachtelter Strukturelemente aus einer ARE-Außenkapillare 11 und einer verschachtelten NE-Innenkapillare 12 vor. Das ARE-Außenrohr 11 hat einen Außendurchmesser von 7,46 mm und verschachtelte NE-Innenrohr 12 hat einen Außendurchmesser im Bereich von 4,6 mm. Die Wandstärke aller Strukturelemente (11; 12) ist gleich und liegt bei 0,37 mm. Die Längen von ARE-Außenrohr 11 und verschachteltem ARE-Innenrohr 12 entsprechen der Länge des Hüllrohres 14.

Das Hüllrohr 14 wird in einem Vertikalziehverfahren ohne Formwerkzeug mit einem zweistufigen Elongierprozess hergestellt. In der ersten Stufe wird ein Ausgangshohlzylinders aus Glas zur Einstellung von Ausgangshohlzylinder-Endmaßen mechanisch bearbeitet. Laut Endmaß beträgt der Außendurchmesser 90 mm und das Durchmesserverhältnis von Außen- und Innendurchmesser beträgt 2,5. Der Ausgangszylinder wird in einem ersten Elongierprozess mit vertikal orientierter Längsachse kontinuierlich einer Heizzone mit einer Heizzonenlänge von 200 mm zugeführt, darin bereichsweise erweicht und aus dem erweichten Bereich wird ein Zwischenzylinder abgezogen. Dieser wird in einem zweiten Elongierprozess mit vertikal orientierter Längsachse kontinuierlich einer anderen Heizzone mit einer Heizzonenlänge von 100 mm zugeführt, darin bereichsweise erweicht und aus dem erweichten Bereich ein Rohrstrang abgezogen. Aus dem Rohrstrang wird das Hüllrohr durch Ablängen erhalten.

Die Fixierung der Kapillar-Halbzeuge 5 an der Innenwand des Hüllrohrs 14 erfolgt mittels einer auf SiO$_2$ basierenden Verbindungsmasse 16. Dazu wird die Verbindungsmasse 16 auf der Hüllrohr-Innenmantelfläche lokal im Bereich der stirnseitigen Enden aufgetragen und die Kapillar-Halbzeuge 5 werden darauf unter Einsatz einer Positionierungs-Schablone mit konstruktiv vorgegebener sternförmiger Anordnung von Haltearmen für die einzelnen Kapillar-Halbzeuge 5 aufgesetzt. Die Positionierungs-Schablone ist dabei auf den Bereich um die beiden stirnseitigen Hüllrohr-Enden beschränkt.

Die so erzeugte primäre Vorform 15 wird in einem Elongierprozess zu einem sogenannten "Cane" (Kernstab) mit einem Außendurchmesser von 20mm thermisch getreckt. Dabei verbinden sich die Kapillarhalbzeuge 5 über die komplette Länge mit der Innenwand des Hüllrohres 14. Anschließend wird das gestreckte Hüllrohr 14 mit einem Überfangzylinder aus Quarzglas überfangen, wobei der Überfangzylinder auf das gestreckte Hüllrohr 14 aufkollabiert, und gleichzeitig wird das Ensemble zu einer sekundären Vorform elongiert. Der Überfangzylinder hat einen Außendurchmesser von 75mm und eine Wandstärke von 25mm.

Beim Kollabier- und Elongierprozess wird die koaxiale Anordnung von Hüllrohr 1 und Überfangzylinder bei vertikal orientierter Längsachse von unten kommend einer temperaturgeregelten Heizzone zugeführt und darin mit dem oberen Ende der Anordnung beginnend zonenweise erweicht.

Die Heizzone wird auf eine Soll-Temperatur von 1600 °C mit einer Regelgenauigkeit von +/- 0.1 °C gehalten. Dadurch können Temperaturschwankungen im Heißformprozess auf weniger als +/- 0.5°C begrenzt werden.

Beim Kollabier- und Elongierschritt wird der Spalt zwischen dem Überfangzylinder und dem Cane evakuiert.

Die im Kollabier- und Elongierprozess auf diese Weise gebildete sekundäre Vorform hat einen Außendurchmesser von 50 mm und eine aus äußerem Mantel und innerem Mantel zusammengesetzte Mantel-Wanddicke von 19,55mm (Innendurchmesser: 10,9mm). Die sekundäre Vorform wird zu einer Antiresonanten Hohlkernfaser elongiert. Dazu werden alle Strukturelemente der ehemaligen Kapillar-Halbzeuge 5 mit der oben erwähnten Versiegelungs- oder Verbindungsmasse verschlossen. Die Verschlussmasse ist dabei nur auf diejenige Stirnseite der Kapillar-Halbzeuge aufgebracht, die beim Faserziehprozess nach oben weist.

Dieselbe Stirnseite wird anschließend mit einem Halterohr aus Quarzglas verbunden, der gleichzeitig als Gasanschluss dient. Der Halter wird mittels der Versiegelungs- oder Verbindungsmasse am Überfangzylinder und am Hüllrohr fixiert. Beim Faserziehprozess wird die sekundäre Vorform bei vertikal orientierter Längsachse von oben kommend einer temperaturgeregelten Heizzone zugeführt und darin mit dem unteren Ende beginnend zonenweise erweicht. Die Heizzone wird auf eine Soll-Temperatur von etwa 2100 °C mit einer Regelgenauigkeit von +/- 0.1 °C gehalten. Dadurch können Temperaturschwankungen im Heißformprozess auf weniger als +/- 0.5°C begrenzt werden. Gleichzeitig wird dem Kernbereich (Hohlkern) Gas zugeführt, so dass sich im Kernbereich ein Innendruck von 4 mbar einstellt.

Durch den so geführten Faserziehprozess wird eine Antiresonante Hohlkernfaser mit darin eingebetteten Antiresonanzelementen erhalten, die eine runde Querschnittsform haben.

## Patentansprüche

1. Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:

   (a) Bereitstellen eines Hüllrohres (14), das eine Hüllrohr-Innenbohrung (16) und eine Hüllrohr-Längsachse aufweist, entlang der sich eine von einer Innenseite und einer Außenseite begrenzte Hüllrohr-Wandung erstreckt,
   (b) Bereitstellen von rohrförmigen Antiresonanzelement-Vorformlingen (5), von denen mindestens ein Teil als Kapillarhalbzeug (5) vorliegt, das mindestens eine ARE-Außenkapillare (11) und mindestens eine mit einer Innenmantelfläche der ARE-Außenkapillare (11) verbundene, verschachtelte NE-Innenkapillare (12) umfasst, wobei die Herstellung des Kapillarhalbzeugs folgende Verfahrensschritte umfasst:

      (b1) Fixieren eines NE-Innenrohres (2), das einen Außendurchmesser $OD_{NE}$ und einen Innendurchmesser $ID_{NE}$ aufweist an der Innenmantelfläche eines ARE-Außenrohres (1), das einen Außendurchmesser $OD_{ARE}$ und einen Innendurchmesser $ID_{ARE}$ aufweist, unter Bildung eines Kapillarhalbzeug-Ensembles (4),
      (b2) thermisches Strecken des Kapillarhalbzeug-Ensembles (4) zu dem Kapillarhalbzeug (5), das einen maximalen Außendurchmesser $OD_{ARE\_cap}$ und eine maximale Wanddicke $WT_{ARE\_cap}$ aufweist,

   (c) Montieren des Kapillarhalbzeugs (5) an Soll-Positionen der Innenseite der Hüllrohr-Wandung unter Bildung einer primären Vorform (15), die einen hohlen Kernbereich (16) und einen Mantelbereich aufweist,
   (d) Elongieren der primären Vorform (15) zu der Hohlkernfaser oder Weiterverarbeitung der primären Vorform (15) zu einer sekundären Vorform, aus der die Hohlkernfaser gezogen wird.
   **dadurch gekennzeichnet, dass** die geometrischen Abmessungen $OD_{NE}$, $ID_{NE}$, $OD_{ARE}$, $ID_{ARE}$ sowie $OD_{ARE\_cap}$ und $WT_{ARE\_cap}$ derart aufeinander abgestimmt werden, dass die ARE-Außenkapillare (11) des Kapillarhalbzeugs (5) einen Ovalitätsgrad von weniger als 1,025 aufweist.

2. Verfahren nach Anspruch 1, **dadurch gekennzeichnet, dass** die gim Zusammenhang mit folgenden Faktoren (F1) bis (F4) eingestellt werden:

   (F1) das Verhältnis des Gleichgewichtsdrucks $p_{eg\_NE}$ des NE-Innenrohrs (2) und des Gleichgewichtsdrucks $p_{eq\_ARE}$ des ARE-Außenrohrs (1),
   (F2) der Abstand zwischen dem ARE-Außenrohr (1) und dem NE-Innenrohr (2), bezogen auf den Innendurchmesser des ARE-Außenrohrs (1) $(ID_{ARE}-OD_{NE})/ID_{ARE}$,
   (F3) das Verjüngungsverhältnis $OD_{ARE}/OD_{ARE\_cap}$ beim thermischen Strecken des Kapillarhalbzeug-Ensembles (4) gemäß Verfahrensschritt (b2),
   (F4) das Verhältnis $OD_{ARE\_cap}/WT_{ARE\_cap}$ von Außendurchmesser und Wanddicke des Kapillarhalbzeugs (5).

3. Verfahren nach Anspruch 2, **dadurch gekennzeichnet, dass** die Durchmesserabmessungen von ARE-Außenrohr beziehungsweise von NE-Innenrohr so gewählt werden, dass der Gleichgewichtsdruck $p_{eq,NE}$ im Bereich von 60 bis 90 Pa, bevorzugt im Bereich von 65 bis 80 Pa, und der Gleichgewichtsdruck $p_{eq\_ARE}$ im Bereich von 25 bis 50 Pa, bevorzugt im Bereich von 30 bis 40 Pa liegt.

4. Verfahren nach Anspruch 2 oder 3, **dadurch gekennzeichnet, dass** die Gleichgewichtsdrücke $p_{eq;NE}$ und $p_{eq;ARE}$ so eingestellt werden, dass der Faktor (F1) einen Wert im Bereich von 1,5 bis 2,5, vorzugsweise einen Wert im Bereich von 1,5 bis 2 einnimmt.

5. Verfahren nach einem der Ansprüche 2 bis 4, **dadurch gekennzeichnet, dass** der Faktor (F2) auf einen Wert im Bereich von 0,2 bis 0,5, vorzugsweise auf einen Wert im Bereich von 0,3 bis 0,4 eingestellt wird.

6. Verfahren nach einem der Ansprüche 2 bis 5, **dadurch gekennzeichnet, dass** der Faktor (F3) auf einen Wert im Bereich von 5 bis 10, vorzugsweise auf einen Wert im Bereich von 5 bis 8 eingestellt wird.

7. Verfahren nach einem der Ansprüche 2 bis 6, **dadurch gekennzeichnet, dass** der Faktor (F4) auf einen Wert im Bereich von 15 bis 25, vorzugsweise auf einen Wert im Bereich von 15 bis 20 eingestellt wird.

8. Verfahren nach einem der Ansprüche 2 bis 7, **dadurch gekennzeichnet, dass** die Faktoren (F1) bis (F4) derart eingestellt werden, dass das Kapillarhalbzeug (5) einen Ovalitätsgrad von weniger als 1,025 aufweist.

9. Verfahren nach einem der Ansprüche 2 bis 8, **dadurch gekennzeichnet, dass** das mathematische Produkt der Faktoren (F1) bis (F4) einen geometrischen Parameter definiert,

$$Paramter(geo) = \frac{peq_{NE}}{Peq_{ARE}} \; x \; \frac{ID(ARE) - OD(NE)}{ID(ARE)} \; x \; \frac{OD(ARE)}{OD(ARE)_{cap}} \; x \; \frac{OD(ARE)_{cap}}{WT(ARE)_{cap}}$$

der im Bereich von 35 bis 75, vorzugsweise im Bereich von 40 bis 60 liegt.

10. Verfahren nach einem der vorhergehenden Ansprüche, **dadurch gekennzeichnet, dass** die primäre Vorform (15) einen Außendurchmesser im Bereich von 26 bis 230 mm, vorzugsweise von 30 bis 200 mm, aufweist.

11. Verfahren zur Herstellung einer Vorform (15) für eine Antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:

(a) Bereitstellen eines Hüllrohres (14), das eine Hüllrohr-Innenbohrung (16) und eine Hüllrohr-Längsachse aufweist, entlang der sich eine von einer Innenseite und einer Außenseite begrenzte Hüllrohr-Wandung erstreckt,
(b) Bereitstellen von rohrförmigen Antiresonanzelement-Vorformlingen, von denen mindestens ein Teil als Kapillarhalbzeug (5) vorliegt, das mindestens eine ARE-Außenkapillare (11) und mindestens eine mit einer Innenmantelfläche der ARE-Außenkapillare (11) verbundene, verschachtelte NE-Innenkapillare (12) umfasst, wobei die Herstellung des Kapillarhalbzeugs (5) folgende Verfahrensschritte umfasst:

(b1) Fixieren eines NE-Innenrohres (2), das einen Außendurchmesser $OD_{NE}$ und einen Innendurchmesser $ID_{NE}$ aufweist an der Innenmantelfläche eines ARE-Außenrohres (1), das einen Außendurchmesser $OD_{ARE}$ und einen Innendurchmesser $ID_{ARE}$ aufweist, unter Bildung eines Kapillarhalbzeug-Ensembles (4),
(b2) thermisches Strecken des Kapillarhalbzeug-Ensembles (4) zu dem Kapillarhalbzeug (5), das einen maximalen Außendurchmesser $OD_{ARE\_cap}$ und eine maximale Wanddicke $WT_{ARE\_cap}$ aufweist,

(c) Montieren des Kapillarhalbzeugs (5) an Soll-Positionen der Innenseite der Hüllrohr-Wandung unter Bildung einer primären Vorform (15), die einen hohlen Kernbereich (16) und einen Mantelbereich aufweist, und
(d) optionale Weiterverarbeitung der primären Vorform (15) zu einer sekundären Vorform für die Hohlkernfaser, wobei die Weiterverarbeitung eine einmalige oder wiederholte Durchführung von einem oder mehreren der folgenden Heißformprozesse umfasst:

(i) Elongieren,

(ii) Kollabieren,

(iii) Kollabieren und gleichzeitiges Elongieren,

(iv) Aufkollabieren von zusätzlichem Mantelmaterial,

(v) Aufkollabieren von zusätzlichem Mantelmaterial und anschlie-ßendes Elongieren,

(vi) Aufkollabieren von zusätzlichem Mantelmaterial und gleichzeitiges Elongieren,

**dadurch gekennzeichnet, dass** die geometrischen Abmessungen $OD_{NE}$, $ID_{NE}$, $OD_{ARE}$, $ID_{ARE}$ sowie $OD_{ARE\_cap}$ und $WT_{ARE\_cap}$ derart eingestellt werden, dass die ARE-Außenkapillare des Kapillarhalbzeugs einen Ovalitätsgrad von weniger als 1,025 aufweist.

12. Verfahren nach Anspruch 11, **dadurch gekennzeichnet, dass** die geometrischen Abmessungen im Zusammenhang mit folgenden Faktoren (F1) bis (F4) eingestellt werden:

(F1) das Verhältnis des Gleichgewichtsdrucks $p_{eg\_NE}$ des NE-Innenrohrs (2) und des Gleichgewichtsdrucks $p_{eq\_ARE}$ des ARE-Außenrohrs (1),

(F2) der Abstand zwischen dem ARE-Außenrohr (1) und dem NE-Innenrohr (2), bezogen auf den Innendurchmesser des ARE-Außenrohrs (1) $(ID_{ARE}\text{-}OD_{NE})/ID_{ARE}$,

(F3) das Verjüngungsverhältnis $OD_{ARE}/OD_{ARE\_cap}$ beim thermischen Strecken des Kapillarhalbzeug-Ensembles (4) gemäß Verfahrensschritt (b2),

(F4) das Verhältnis $OD_{ARE\_cap}/WT_{ARE\_cap}$ von Außendurchmesser und Wanddicke des Kapillarhalbzeugs (5).

13. Kapillarhalbzeug (5) als Zwischenprodukt für die Herstellung einer Antiresonanten Hohlkernfaser, das mindestens eine ARE-Außenkapillare (11) und mindestens eine mit der Innenmantelfläche der ARE-Außenkapillare (11) verbundene, verschachtelte NE-Innenkapillare (12) umfasst, **dadurch gekennzeichnet, dass** die ARE-Außenkapillare (11) einen Ovalitätsgrad von weniger als 1,025 aufweist.

14. Vorform für eine Antiresonante Hohlkernfaser, wobei die Vorform einen hohlen Kernbereich und einen Mantelbereich aufweist, der ein Hüllrohr (14) mit einer Hüllrohr-Wandung und eine Anzahl an einer Innenseite der Hüllrohr-Wandung angeordneter rohrförmiger Antiresonanzelement-Vorformlinge (5) umfasst, **dadurch gekennzeichnet, dass** mindestens ein Teil der Antiresonanzelement-Vorformlinge als Kapillarhalbzeug (5) nach Anspruch 13 ausgebildet ist.

**Fig. 1**

**Fig. 2**

**Fig. 3**

Fig. 4

Fig. 5

## Fig. 6

Europäisches
Patentamt

European
Patent Office

Office européen
des brevets

**EUROPÄISCHER RECHERCHENBERICHT**

Nummer der Anmeldung

EP 20 21 4991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | A F KOSOLAPOV ET AL: "Hollow-core revolver fibre with a double-capillary reflective cladding", QUANTUM ELECTRONICS., Bd. 46, Nr. 3, 29. März 2016 (2016-03-29), Seiten 267-270, XP055502520, GB ISSN: 1063-7818, DOI: 10.1070/QEL15972 * Seite 268; Abbildung 2 * ----- | 1,2,4,5, 8,10-14 | INV. C03B37/012 C03B37/027 |

RECHERCHIERTE SACHGEBIETE (IPC)

C03B

Der vorliegende Recherchenbericht wurde für alle Patentansprüche erstellt

| Recherchenort | Abschlußdatum der Recherche | Prüfer |
|---|---|---|
| Den Haag | 3. Mai 2021 | Creux, Sophie |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FRANCESCO POLETTI.** Nested antiresonant nodeless hollow core fiber. *Optics Express,* 2014, vol. 22 (20
- **A. F. KOSOLAPOV ; G. K. ALAGASHEV ; A. N. KOLYADIN ; A. D. PRYAMIKOV ; A. S. BIRIUKOV ; I. A. BUFETOV ; E. M. DIANOV.** Hollow-core revolver fibre with a double-capillary reflective cladding. *Kvantovaya Elektronika,* 2016, vol. 46 (3), 267-270

- **K. SCHUSTER ; J. KOBELKE ; A. SCHWUCHOW ; M. LEICH ; M. BECKER ; M. ROTHHARDT ; U. RÖPKE ; J. KIRCHHOF ; H. BARTELT ; T. GEERNAERT.** Preparation and applications of germanium and fluorine doped microstructured fibers. *Proc. SPIE 6588, Photonic Crystal Fibers,* 22. Mai 2007, 658804